# EUROPÄISCHE PATENTANMELDUNG

(11) **EP 4 764 854 A1**
(43) Veröffentlichungstag der Anmeldung: **24.06.2026**
(21) Anmeldenummer: 25222835.8
(22) Anmeldetag: 12.12.2025
(51) Int. Cl.: G06F 9/48, G06F 9/30, G06F 9/455, G06F 9/52

(54) **VERFAHREN UND VORRICHTUNG ZUR DURCHFÜHRUNG EINER MEHRZAHL VON COMPUTERPROGRAMMEN AUF EINER DATENVERARBEITUNGSANLAGE**

(30) Priorität: 13.12.2024 DE 102024137609
(71) Anmelder: Deutsches Zentrum für Luft- und Raumfahrt e.V., 53227 Bonn-Oberkassel (DE)
(72) Erfinder: Zaeske, Wanja, 38104 Braunschweig (DE)
(74) Vertreter: Gramm, Lins & Partner Patent- und Rechtsanwälte PartGmbB

(57) **Zusammenfassung**

Die Erfindung betrifft ein Verfahren zum Ausführen einer Mehrzahl von Computerprogrammen auf einer Datenverarbeitungsanlage, die wenigstens zwei separate Recheneinheiten hat, die sich eine gemeinsame Ressource der Datenverarbeitungsanlage teilen, wobei jedes Computerprogramm durch Bytecode als Programmcodemittel auf einer der Recheneinheiten der Datenverarbeitungsanlage ausgeführt, indem die als Bytecode vorliegenden Programmcodemittel des jeweiligen Computerprogramms in die für die Recheneinheiten relevanten Maschinenbefehle mittels eines Codeumsetzers der Datenverarbeitungsanlage umgesetzt werden, **dadurch gekennzeichnet, dass** der Codeumsetzer für jedes Computerprogramm jeweils mindestens einen Interferenzwert in Abhängigkeit von einer Anzahl von umgesetzten Maschinenbefehlen pro Zeitschritt ermittelt.

## Beschreibung

Die Erfindung betrifft ein Verfahren zur Durchführung einer Mehrzahl von Computerprogrammen auf einer Datenverarbeitungsanlage, die wenigstens zwei separate Recheneinheiten hat, die sich eine gemeinsame Ressource der Datenverarbeitungsanlage teilen. Die Erfindung betrifft ebenso ein Computerprogramm hierzu.

Die Erfindung betrifft außerdem eine Datenverarbeitungsanlage die wenigstens zwei separate Recheneinheiten hat, die sich eine gemeinsame Ressource der Datenverarbeitungsanlage teilen.

In der Luftfahrt werden immer mehr Computersysteme verwendet, um den Piloten beim Steuern des Flugobjektes zu unterstützen und gegebenenfalls auch autark die Steuerung des Flugobjektes übernehmen zu können. Hierbei sind eine Vielzahl von verschiedenen Avioniksystemen im Einsatz, die jeweils unterschiedliche flugrelevante Betriebsverfahren durchführen, um so einen sicheren Flugbetrieb des Flugobjektes gewährleisten zu können.

Solche Avioniksysteme, die sich in der Regel von den Kabinensystemen unterscheiden, können beispielsweise Flugkontroll- und Managementsysteme (Autopilot, Flight Management System, Fly-by-wire Steuerungen, Kollisionswanrsysteme wie bspw. TCAS, etc), Kommunikationssysteme (Flugfunksysteme), Navigationssysteme (bspw. Instrumentenlandesysteme wie ILS), Anzeigesysteme, Sensorsysteme (bspw. Radarsysteme) sowie auch interne (Daten)Bussysteme sein. Derartige Avioniksysteme sind geprägt durch ihre elektronische Durchführung von derartigen flugrelevanten Betriebsverfahren.

Um die Anzahl der für jedes flugrelevante Betriebsverfahren benötigten elektronischen Ausrüstung zu minimieren bzw. zu reduzieren, werden oftmals mehrere flugrelevante Betriebsverfahren auf einer elektronischen Recheneinrichtung ausgeführt. Da die flugrelevanten Betriebsverfahren unter Umständen sicherheitskritisch sein können, muss verhindert werden, dass bei einer Fehlfunktion während der Ausführung eines flugrelevanten Betriebsverfahren die auf der elektronischen Recheneinrichtungen weiterhin ausgeführten flugrelevanten Betriebsverfahren durch diese Fehlfunktion nicht beeinträchtigt werden.

Wenn mehrere Computerprogramme (auch Applikationen genannt) zeitgleich bzw. quasi-zeitgleich auf einer Datenverarbeitungsanlage ausgeführt werden, können Abläufe in einer Applikation das zeitliche Verhalten einer anderen Applikation beeinflussen. Insbesondere auf Mehrkernsystemen und/oder Mehrprozessorsystemen, also solchen wo mehrere Prozessorkerne und/oder CPUs zeitgleich verschiedene Programme parallel ausführen können, kann durch die Verwendung von geteilten Ressourcen (wie z. B. dem gemeinsam genutzten RAM) eine erhebliche Verlangsamung einer Applikation durch eine andere Applikation verursacht werden. Dieses Phänomen wird in der Literatur unter dem Begriff Multikern-Interferenz beschrieben.

In Luftfahrtsystemen wird seit einiger Zeit das Integrated Modular Avionics (IMA) Paradigma verfolgt. Ziel ist es, mehrere Applikationen auf einem Computer auszuführen. Dem gegenüber steht der vorher dominante Ansatz, Federated Avionics (FA), bei welchem jede Applikation auf einem eigenen Computer lauft. Die Vorteile von IMA liegen auf der Hand. Durch die Konsolidierung von Applikationen auf einem Computer können Gewicht und Stromverbrauch reduziert werden, da eine höhere Auslastung der Computer ermöglicht wird. Dies spart wiederum Kosten sowohl im Betrieb wie auch in der Entwicklung. Grundvoraussetzung für das Ausführen mehrere Applikationen auf einem Computer ist aber, dass diese sich gegenseitig nicht stören. Nur wenn die Isolation zwischen mehreren Applikationen, welche auf einem Computer ausgeführt werden, hinreichend gewährleistet ist, kann IMA für sicherheitskritische Systeme in der Luftfahrt genutzt werden.

Zwei Dimensionen sind dabei für diese Isolation von Bedeutung, die zeitliche Isolation und die räumliche Isolation. Traditionell wurde die zeitliche Isolation durch die Sequentielle Ausführung der verschiedenen Applikationen auf einem Computer erreicht, wodurch eine quasi-zeitgleiche Ausführung verschiedener Programme erreicht wird. Zeitscheiben fester Größe haben hier sichergestellt, dass jede Applikation die benötigte Rechenzeit auf dem Prozessor erhält.

Mit dem Aufkommen der Mehrkernprozessoren ist jedoch auch das Bedürfnis große geworden, verschiedenen Applikationen zeitgleich, jeweils auf verschiedenen Prozessorkernen derselben Datenverarbeitungsanlage (desselben Computers), auszuführen. Dies ist allerdings ein Szenario, das für Mehrkern-Interferenz besonders anfällig ist. Das sequentielle Ausführen der Applikationen ist nach wie vor möglich, allerdings skalieren viele Applikationen gerade im sicherheitskritischen Bereich nicht gut auf mehrere Prozessorkerne, d.h. effektiv wird das System dann häufig nur einen Prozessorkern nutzen. Der Trend geht aber hin zu immer mehr Prozessorkernen, d.h. die technologische Entwicklung nützt dem Nutzungsfall in der Avionik nicht.

Zu guter Letzt ist es wünschenswert, die Applikationen einzeln für die Zulassung zu betrachten. Bei FA und IMA auf einem Einkernprozessor ist dies durch die zeitliche und räumliche Isolation stellt dies grundsätzlich kein Problem dar und ist unter inkrementeller Zulassung bekannt, die eine erhebliche Einsparungen bei den Zulassungskosten. Sobald aber mehre Applikationen zeitgleich auf verschiedenen Prozessorkernen oder bei Multi-CPU System zeitgleich auf mehreren CPUS desselben Computer ausgeführt werden sollen, müssen aufwendige Analysen aufzeigen, dass Mehrkern-Interferenz und die daraus resultierenden Effekte im vertretbaren Rahmen bleiben.

Eine Inkrementelle Zulassung, in der die Applikationen völlig unabhängig voneinander betrachtet werden können, verbietet sich bei diesem Ansatz gänzlich, wenn wenigstens eine der Applikationen eine sicherheitskritische Anwendung ist.

Aus der nachveröffentlichten DE 10 2023 109 854.3 ist ein Avionikcomputer für den on-board Flugbetrieb in einem Flugobjekt bekannt, der auf einer Recheneinheit Computerprogramme ausführen kann. Die Computerprogramme haben dabei Programmcodemitteln, die zumindest teilweise als Bytecode vorliegen und durch einen Codeumsetzer in die für die Recheneinheit relevanten Maschinenbefehle zur Laufzeit umgesetzt werden.

Es ist daher Aufgabe der vorliegenden Erfindung ein verbessertes Verfahren und eine verbesserte Vorrichtung zum zeitgleichen Ausführen von Computerprogrammen auf einer Datenverarbeitungsanlage anzugeben.

Die Aufgabe wird mit dem Verfahren gemäß Anspruch 1 erfindungsgemäß gelöst. Vorteilhafte Ausführungsformen der Erfindung finden sich dann in den entsprechenden Unteransprüchen.

Gemäß Anspruch 1 wird ein Verfahren zum Ausführen einer Mehrzahl von Computerprogrammen auf einer Datenverarbeitungsanlage vorgeschlagen, die gattungsgemäß wenigstens zwei separate Recheneinheiten hat, die sich eine gemeinsame Ressource der Datenverarbeitungsanlage teilen. Solche Recheneinheiten können beispielsweise Kerne eines Multikernprozessors sein. Eine solche Recheneinheit kann aber auch eine eigenständige CPU darstellen, die Datenverarbeitungsanlage ein Multi-CPU-System ist. Die Datenverarbeitungsanlage ist dabei eingerichtet, dass auf jeder Recheneinheit mindestens ein Computerprogramm ausgeführt werden kann, wobei die Computerprogramme dabei zeitlich parallel ausgeführt werden. Dabei teilen sich die Recheneinheiten mindestens eine gemeinsame Ressource der Datenverarbeitungsanlage, beispielsweise den RAM oder Festplatte.

Dabei ist vorgesehen, dass jedes Computerprogramm durch Bytecode als Programmcodemittel auf einer der Recheneinheiten der Datenverarbeitungsanlage ausgeführt wird, sodass auf mindestens zwei Recheneinheiten zeitgleich parallel jeweils mindestens ein Computerprogramm mit Bytecode als Programmcodemitteln ausgeführt werden kann. Hierfür weist die Datenverarbeitungsanlage weiterhin einen Codeumsetzer auf, der zum Umsetzen der als Bytecode vorliegenden Programmcodemittel des jeweiligen Computerprogramms in die für die jeweilige Recheneinheit relevanten Maschinenbefehle eingerichtet ist. Demnach wird in der einfachsten Ausführungsform auf einer ersten Recheneinheit ein erstes Computerprogramm ausgeführt und auf einer von der ersten Recheneinheit verschiedenen zweiten Recheneinheit ein von dem ersten Computerprogramm Verschiedenes zweites Computerprogramm ausgeführt, wobei die Ausführung des ersten und des zweiten Computerprogramms zeitlich parallel erfolgt und die Programmcodemitteln des ersten und des zweiten Computerprogramms als Bytecode vorliegen. Der Codeumsetzer setzt dabei den Bytecode des ersten Computerprogramms in Maschinenbefehle für die erste Recheneinheit um und den Bytecode des zweiten Computerprogramms in Maschinenbefehle für die zweite Recheneinheit.

Die Computerprogramme sind demnach in Bytecode implementiert, wobei mithilfe eines Codeumsetzers dieser Bytecode dann in die für die Recheneinheit relevanten Maschinenbefehle zur Laufzeit des jeweiligen Computerprogramms umgesetzt wird. Die Computerprogramme liegen somit nicht, wie im Stand der Technik bekannt, vollständig kompiliert und als reine Maschinenbefehle für die konkrete Zielmaschine (Recheneinheit) vor, sondern als Bytecode, aus dem mithilfe des Codeumsetzers die relevanten Maschinenbefehle zur Laufzeit erzeugt werden.

Bei dem Bytecode handelt es sich somit nicht um Maschinenbefehle für eine konkrete Recheneinheit, sondern um einen Zwischencode, der erst mithilfe eines Codeumsetzers, der auf der Zielmaschine ausgeführt wird, in die entsprechenden Maschinenbefehle der Zielmaschine umgesetzt wird. Der Codeumsetzer ist dabei in der Regel ein Computerprogramm, welches als Maschinencode vorliegt und auf der Zielmaschine direkt ausführbar ist, d.h. die den Codeumsetzer enthaltenden Maschinencodebefehle können direkt von der Zielmaschine ausgeführt werden.

Da der komplette Zustand des Codeumsetzers in Software abgebildet werden kann und der Bytecode universell ist, kann auch eine laufende Instanz einfach migriert werden, da lediglich der Zustand des Codeumsetzers und der eigentlichen Bytecode der Applikation auf den Zielcomputer kopiert werden muss.

Erfindungsgemäß ist nun vorgesehen, dass der Codeumsetzer für jedes Computerprogramm jeweils mindestens einen Interferenzwert in Abhängigkeit von einer Anzahl von umgesetzten Maschinenbefehlen pro Zeitschritt ermittelt.

Der Interferenzwert kann für alle Computerprogramme einheitlich sein, sodass der Interferenzstatus der gesamten Datenverarbeitungsanlage sichtbar wird. Denkbar ist aber auch, dass für jedes einzelne Computerprogramm ein eigener Interferenzwert aus der Anzahl von umgesetzten Maschinenbefehle pro Zeitschritt und pro Recheneinheit ermittelt wird, sodass die aktuelle Wechselwirkung der Interferenz auf das jeweilige Computerprogramm sichtbar wird.

Eine solche Interferenz entsteht dabei, wenn zwei parallel ablaufende Computerprogramme auf verschiedenen Recheneinheiten auf eine gemeinsame Ressource zugreifen und diese für den parallelen Zugriff nicht geeignet ist oder nicht dafür hergerichtet oder ausgelegt ist. In diesem Augenblick wird die Ausführung des ersten Computerprogramms auf der ersten Recheneinheit beeinflusst durch die Verwendung der gemeinsamen Ressource durch das Zweite Computerprogramm auf der zweiten Recheneinheit, was durch den ermittelten Interferenzwert sichtbar wird.

Wird beispielsweise die Anzahl der Maschinenbefehle pro Zeitschritt auf der ersten Recheneinheit und/oder bezüglich des ersten Computerprogramms deutlich geringer, während die Anzahl der Maschinenbefehle pro Zeitschritt auf der zweiten Recheneinheit und/oder bezüglich des zweiten Computerprogramms deutlich steigen, so kann von einer Wechselwirkung der beiden Computerprogramme ausgegangen werden, obwohl diese auf getrennten Recheneinheiten ausgeführt werden.

Mithilfe des so ermittelten Interferenzwertes ist es möglich, problematische Wechselwirkungen zwischen Recheneinheiten zu erkennen und so eine negative Interferenz zwischen zwei Computerprogrammen auf zwei verschiedenen Recheneinheiten sichtbar zu machen. Dies ermöglicht, in einem geeigneten Regelkreis auf eine möglichst interferenzschwache Wechselwirkung einzuwirken und/oder die Zertifizierung durch inkrementelle Zulassung auch bei mehr Kernprozessoren zu realisieren.

Mithilfe der vorliegenden Erfindung kann somit ein Maß für die Interferenz wenigstens zweier Computerprogramme, die parallel auf unterschiedlichen Recheneinheiten ausgeführt werden, angegeben werden, ohne dass hierfür die Computerprogramme, die ausgeführt werden sollen, angepasst werden müssen oder hardwareseitig entsprechende Systeme vorgesehen sein müssen, um die Interferenz zu messen. Damit kann die Zielplattform, auf der die Computerprogramme ausgeführt werden sollen, unverändert bleiben sowie auch die auszuführenden Computerprogramme.

Gemäß einer Ausführungsform ist vorgesehen, dass der Codeumsetzer die Programmcodemittel mittels eines Codeinterpreters und/oder mittels eines Just-In-Time- Kompilierers in die für die Recheneinheiten relevanten Maschinenbefehle umsetzt.

Gemäß einer Ausführungsform ist vorgesehen, dass jedem Computerprogramm jeweils ein Codeumsetzungsmodul des Codeumsetzers zugeordnet wird, wobei die als Bytecode vorliegenden Programmcodemittel des zugeordneten Computerprogramms in die für die jeweilige Recheneinheit relevanten Maschinenbefehle durch das dem jeweiligen Computerprogramm zugeordnete Codeumsetzungsmodul umgesetzt werden.

Gemäß einer Ausführungsform ist vorgesehen, dass die Ausführungsgeschwindigkeit von wenigstens einem der Computerprogramme in Abhängigkeit von wenigstens einem ermittelten Interferenzwert variiert wird.

Demnach kann die Ausführungsgeschwindigkeit für jene Computerprogramme reduziert werden, die einen hohen Durchsatz an Maschinenbefehle pro Zeitschritt haben, umso zugunsten der übrigen Computerprogramme die Ausführungsgeschwindigkeit zu erhöhen. Denn durch die Reduzierung des Durchsatzes an Maschinenbefehlen pro Zeitschritt kann die Interferenz auf die gemeinsam genutzte Ressource aufgebrochen werden, sodass die übrigen Computerprogramme genügend Zugriffsmöglichkeiten auf die gemeinsam genutzte Ressource erhalten.

Gemäß einer Ausführungsform ist vorgesehen, dass der Codeumsetzer jedem Computerprogramm eine Maximalanzahl von Maschinenbefehlen am Anfang eines jeden Zeitschrittes zuordnet, die in dem Zeitschritt maximal ausgeführt werden können, wobei der Codeumsetzer die Ausführung des Computerprogramms anhält, wenn die zugeordnete Maximalanzahl der Maschinenbefehle im jeweiligen Zeitschritt ausgeführt wurde, bevor der Zeitschritt endet.

Dabei wird für jedes Computerprogramm eine maximale Anzahl von Maschinenbefehlen am Anfang eines jeden Zeitschrittes festgelegt. Die Ausführung eines Maschinenbefehls verbraucht dabei eine gewisse Menge von dieser zuvor festgelegten Anzahl. Ist die Maximalanzahl aufgebraucht, d. h. es wurden genauso viele Maschinenbefehle innerhalb eines Zeitschrittes ausgeführt, wie der Maximalanzahl entspricht, so wird die weitere Ausführung des Computerprogramms unterbrochen. Mit Beginn eines neuen Zeitschritt wird dann die Maximalanzahl der Maschinenbefehle wieder neu festgelegt, sodass pro Zeitschritt das Computerprogramm immer nur die durch die Maximalanzahl definierte Anzahl von Maschinenbefehlen ausführen kann. Dabei müssen die Zeitschritte auf den einzelnen Recheneinheiten nicht synchron sein, können aber auch synchronisiert sein.

Gemäß einer Ausführungsform ist vorgesehen, dass der Interferenzwert in Abhängigkeit von einer Anzahl von Maschinenbefehlen, die am Ende des Zeitschrittes für das jeweilige Computerprogramm nicht ausgeführt wurden, oder in Abhängigkeit von einer Anzahl von Maschinenbefehlen, die am Anfang des Zeitschrittes für das jeweilige Computerprogramm aufgefüllt werden, um die Maximalanzahl zu erreichen, ermittelt wird.

Hierdurch wird der Interferenzwert in Abhängigkeit von den übrig gebliebenen möglichen Maschinenbefehle berechnet. Nutzt ein Computerprogramm in jedem Zeitschritt die zur Verfügung stehende maximale Anzahl von Maschinenbefehlen, während ein anderes Computerprogramm die ihm zur Verfügung stehende Maximalanzahl nicht nutzt, so ist von einer Interferenz dieser beiden Computerprogramme auszugehen. Dabei wird der Interferenzwert auf eine Maß festgelegt, dass der Anzahl von Auffüllungen von Maschinenbefehlen pro Zeiteinheit entspricht.

Gemäß einer Ausführungsform hierzu ist vorgesehen, dass die Maximalanzahl von Maschinenbefehlen für jedes Computerprogramm in Abhängigkeit von wenigstens einem ermittelten Interferenzwert festgelegt wird.

Hierdurch wird ein Regelkreis definiert, durch den auf die bestehende Interferenz zweier Computerprogramme Einfluss genommen wird, in dem beispielsweise dasjenige Computerprogramm, welches regelmäßig vorzeitig seine Maximalanzahl einen möglichen Maschinenbefehle pro Zeitschritt erreicht, in seine Ausführungsgeschwindigkeit reduziert wird (indem Maximalanzahl pro Zeitschritt reduziert wird), während dasjenige Computerprogramm, welches regelmäßig seine Maximalanzahl an Maschinenbefehle in pro Zeitschritt nicht um einen gewissen Prozentsatz ausschöpft, in seine Ausführungsgeschwindigkeit beschleunigt wird (indem die Maximalanzahl pro Zeitschritt gleich bleibt oder erhöht wird).

Gemäß einer Ausführungsform ist vorgesehen, dass die Datenverarbeitungsanlage ein Avionikcomputer für den on-board Flugbetrieb in einem Flugobjekt ist, wobei die Computerprogramme jeweils zur Durchführung eines flugrelevanten Betriebsverfahrens eingerichtet sind.

Der Avionikcomputer kann dabei ein oder mehrere Eingangsschnittstellen aufweisen, über die der Avionikcomputer mit entsprechenden Daten von externen Sensoren und/oder Bussystemen versorgt wird. Des Weiteren kann der Avionikcomputer ein oder mehrere Ausgangschnittstellen aufweisen, um verarbeitete Daten auf ein Bussystem auszugeben und/oder um verarbeitete Daten an andere Aktoren und/oder Sensoren weiterzuleiten. Der Avionikcomputer verarbeitet dabei Eingangsdaten, die über die Eingangsschnittstelle empfangen wurden, und gibt das Ergebnis der Verarbeitung der Eingangsdaten in Form von Ausgangsdaten über die Ausgangsschnittstelle an angeschlossene Elemente, wie bspw. Sensoren oder Bussysteme, wieder aus.

Der Avionikcomputer führt dabei flugrelevante Betriebsverfahren aus, wie bspw. Flugsteuersysteme, Cockpitanzeigen, Flight Management System, Kabinensysteme, Wetter- und/oder Radarauswertungen, etc. Bei den flugrelevanten Betriebsverfahren handelt es sich demnach um auf einer elektronischen Rechenmaschine ausführbare Verfahren, die den Piloten insbesondere im Flug unterstützen.

Die Aufgabe wird im Übrigen auch mit dem Computerprogramm gemäß Anspruch 9 erfindungsgemäß gelöst, wobei das Computerprogramm mit Programmcodemitteln eingerichtet ist zur Durchführung des vorstehend beschriebenen Verfahrens, wenn das Computerprogramm der Datenverarbeitungsanlage ausgeführt wird. Ein solches Computerprogramm ist hierbei insbesondere der Codeumsetzer.

Die Aufgabe wird im Übrigen auch mit der Datenverarbeitungsanlage gemäß Anspruch 10 erfindungsgemäß gelöst, die wenigstens zwei separate Recheneinheiten hat, die sich eine gemeinsame Ressource der Datenverarbeitungsanlage teilen, dadurch gekennzeichnet, dass die Datenverarbeitungsanlage einen Codeumsetzer hat und zur Durchführung vorstehend beschriebenen Verfahrens eingerichtet ist.

Die Erfindung wird anhand der beigefügten Figuren beispielhaft näher erläutert. Es zeigen:
- Figur 1: schematische Darstellung einer Datenverarbeitungsanlage gemäß der vorliegenden Erfindung;
- Figur 2: Diagramm der Ausführung in Zeitschritten.

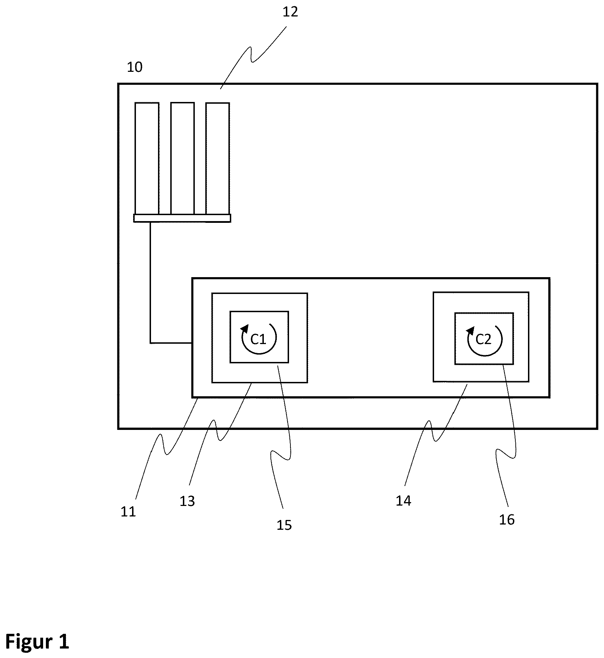

Figur 1 zeigt in einer schematisch stark vereinfachten Darstellung eine Datenverarbeitungsanlage 10, die beispielsweise ein Avionikcomputer sein kann. Die Datenverarbeitungsanlage 10 weist eine Prozessor 11 auf, der durch Ausführung von Maschinenbefehlen entsprechende Anweisungen ausführen kann. Der Prozessor 11 ist dabei mit einem volatilen Speicher (RAM) 12 über einig dargestelltes Mainboard verbunden.

Der Prozessor 11 weist zur parallelen Ausführbarkeit zwei Prozessorkerne 13, 14 auf, die im Sinne der vorliegenden Erfindung als erste Recheneinheit 13 und zweite Recheneinheit 14 bezeichnet werden.

Auf der ersten Recheneinheit 13 wird ein erstes Computerprogramm C1 ausgeführt, während auf der zweiten Recheneinheit 14 ein zweites Computerprogramm C2 ausgeführt wird. Die Programmcodemitteln sowohl des ersten Computerprogramms C1 als auch des zweiten Computerprogramms C2 liegen dabei als Bytecode vor und können in dieser Form nicht nativ von der jeweiligen Recheneinheit 13, 14 ausgeführt werden.

Hierfür ist ein Codeumsetzer vorgesehen, der ein erstes Codeumsetzungsmodul 15 und ein zweites Codeumsetzungsmodul 16 hat. Auf der ersten Recheneinheit 13 wird demnach das erste Codeumsetzungsmodul 15 ausgeführt, um die als Bytecode vorliegenden Programmcodemitteln des ersten Computerprogramms C1 in Maschinenbefehle für die erste Recheneinheit 13 umzusetzen. Auf der zweiten Recheneinheit 14 wird dann das zweite Codeumsetzungsmodul 16 ausgeführt, um die als Bytecode vorliegenden Programmcodemitteln des zweiten Computerprogramms C2 in Maschinenbefehle für die zweite Recheneinheit 14 umzusetzen.

Greife nun beide Computerprogramme C1, C2 während des parallelen und gleichzeitigen Ausführens auf die gemeinsame Ressource 12 (RAM) zu, so kann das dazu führen, dass hierdurch Wartezeiten entstehen, die den weiteren Ablauf eines der Computerprogramme behindert.

Greift beispielsweise das erste Computerprogramm C1 exzessiv auf die gemeinsame Ressource 12 zu, so kann das zweite Computerprogramm C2 keine Daten aus dem gemeinsamen Arbeitsspeicher 12 entnehmen. Das zweite Computerprogramm C2 wartet demnach auf die Daten aus dem Arbeitsspeicher 12, dessen Zugriff durch die Ausführung des ersten Computerprogramms C1 behindert wird.

Erfindungsgemäß wird für jedes der beiden Computerprogramme C1, C2 ein Interferenzwert kontinuierlich ermittelt, der die Interferenz in Bezug auf die gemeinsame Ressource 12 anzeigt. Dieser Interferenzwert wird dabei in Abhängigkeit von den ausgeführten Maschinenbefehlen pro Zeitschritt ermittelt und kann beispielsweise das Verhältnis von ausgeführten Maschinenbefehlen innerhalb eines Zeitschrittes darstellen.

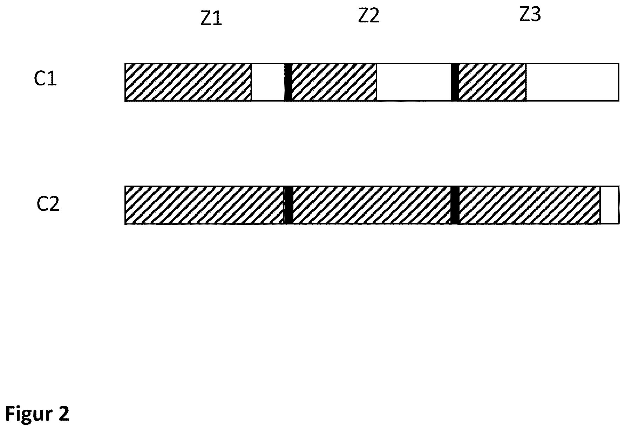

Figur 2 zeigt schematisch einen solchen Ablauf. Dabei wird die Ausführung eines jeden Computerprogramms in Zeitschritte Z1, Z2 und Z3 unterteilt. Die Darstellung von nur drei Zeitschritten dient lediglich der Übersichtlichkeit. In der Praxis dürfte es eine quasi unendliche Anzahl derartiger Zeitschritte geben.

Jedem Computerprogramm C1, C2 wird dabei für jeden Zeitschritt Z1, Z2 und Z3 eine Maximalanzahl von Maschinenbefehlen vorgegeben, die innerhalb des jeweiligen Zeitschrittes durch den Codeumsetzer maximal umgesetzt und ausgeführt werden können.

Im ersten Zeitschritt Z1 ist in Figur 2 erkennbar, dass das erste Computerprogramm C1 seine Maximalanzahl an Maschinenbefehlen aufgebraucht hat, bevor der Zeitschritt endet, was durch die schraffierte Fläche gekennzeichnet ist. Das zweite Computerprogramm C2 hat hingegen seine maximale Anzahl an Maschinenbefehlen im ersten Zeitschritt Z1 nicht aufgebraucht.

Damit wird basierend auf dem ersten Zeitschritt Z1 ein Interferenzwert aus dem Verhältnis der Maschinenbefehle pro Zeitschritt ermittelt, aus dem abgeleitet werden kann, dass sämtliche Maschinenbefehle des ersten Computerprogramms C1 in diesem Zeitschritt aufgebraucht wurden, wären das zweite Computerprogramm C2 noch Maschinenbefehle für diesen Zeitschritt noch übrig hätte. Damit lässt sich eine Interferenz auf eine gemeinsame Ressource ableiten.

Um dem entgegenzusteuern, wird im zweiten Zeitschritt Z2 die Maximalanzahl an Maschinenbefehlen für das erste Computerprogramm C1 reduziert, sodass bereits nach der Hälfte des zweiten Zeitschrittes Z2 die Maschinenbefehle, die dem ersten Computerprogramm C1 zur Verfügung stehen, aufgebraucht sind. Damit wird verhindert, dass in der restlichen Hälfte des zweiten Zeitschrittes Z2 die gemeinsame Ressource durch das erste Computerprogramm C1 blockiert wird und somit das zweite Computerprogramm C2 Zugriff erhält. Der Interferenzwert verbessert sich, wobei das zweite Computerprogramm C2 nach wie vor nicht alle seine zur Verfügung stehenden Maschinenbefehle ausgeführt hat.

Für den dritten Zeitschritt Z3 wird nun abermals die Maximalanzahl an Maschinenbefehlen pro Zeitschritt für das erste Computerprogramm C1 reduziert, sodass für das zweite Computerprogramm C2 mehr Zeit für die gemeinsam genutzte Ressource zur Verfügung steht. Nun wird erkennbar, dass im dritten Zeitschritt Z3 auch das zweite Computerprogramm C2 innerhalb des Zeitschrittes seine Maximalanzahl an Maschinenbefehlen aufgebraucht hat, sodass die Interferenz weitestgehend aufgelöst ist.

In weiteren Zeitschritten kann nun überlegt werden, die Maximalanzahl an Maschinenbefehlen für das erste Computerprogramm C1 schrittweise zu erhöhen, um ein optimales Verhältnis zu finden. Es kann auch überlegt werden, die Maximalanzahl an Maschinenbefehlen für das zweite Computerprogramm C2 anzupassen, um ein ausgewogenes Verhältnis zu erreichen.

### Bezugszeichenliste

- 10: Datenverarbeitungsanlage
- 11: Prozessor
- 12: gemeinsame Ressource/Arbeitsspeicher
- 13: erste Recheneinheit
- 14: zweite Recheneinheit
- 15: erstes Codeumsetzungsmodul
- 16: zweites Codeumsetzungsmodul
- C1: erstes Computerprogramm
- C2: zweites Computerprogramm
- Z1: erster Zeitschritt
- Z2: zweiter Zeitschritt
- Z3: dritter Zeitschritt

## Patentansprüche

1. Verfahren zum Ausführen einer Mehrzahl von Computerprogrammen (C1, C2) auf einer Datenverarbeitungsanlage (10), die wenigstens zwei separate Recheneinheiten (13, 14) hat, die sich eine gemeinsame Ressource (12) der Datenverarbeitungsanlage (10) teilen, wobei jedes Computerprogramm (C1, C2) durch Bytecode als Programmcodemittel auf einer der Recheneinheiten (13, 14) der Datenverarbeitungsanlage (10) ausgeführt, indem die als Bytecode vorliegenden Programmcodemittel des jeweiligen Computerprogramms (C1, C2) in die für die Recheneinheiten (13, 14) relevanten Maschinenbefehle mittels eines Codeumsetzers der Datenverarbeitungsanlage (10) umgesetzt werden, **dadurch gekennzeichnet, dass** der Codeumsetzer für jedes Computerprogramm (C1, C2) jeweils mindestens einen Interferenzwert in Abhängigkeit von einer Anzahl von umgesetzten Maschinenbefehlen pro Zeitschritt (Z1, Z2, Z3) ermittelt.

2. Verfahren nach Anspruch 1, **dadurch gekennzeichnet, dass** der Codeumsetzer die Programmcodemittel mittels eines Codeinterpreters und/oder mittels eines Just-In-Time- Kompilierers in die für die Recheneinheiten (13, 14) relevanten Maschinenbefehle umsetzt.

3. Verfahren nach Anspruch 1 oder 2, **dadurch gekennzeichnet, dass** jedem Computerprogramm (C1, C2) jeweils ein Codeumsetzungsmodul (15, 16) des Codeumsetzers zugeordnet wird, wobei die als Bytecode vorliegenden Programmcodemittel des zugeordneten Computerprogramms (C1, C2) in die für die jeweilige Recheneinheit (13, 14) relevanten Maschinenbefehle durch das dem jeweiligen Computerprogramm (C1, C2) zugeordnete Codeumsetzungsmodul (15, 16) umgesetzt werden.

4. Verfahren nach einem der vorhergehenden Ansprüche, **dadurch gekennzeichnet, dass** die Ausführungsgeschwindigkeit von wenigstens einem der Computerprogramme (C1, C2) in Abhängigkeit von wenigstens einem ermittelten Interferenzwert variiert wird.

5. Verfahren nach einem der vorhergehenden Ansprüche, **dadurch gekennzeichnet, dass** der Codeumsetzer jedem Computerprogramm (C1, C2) eine Maximalanzahl von Maschinenbefehlen am Anfang eines jeden Zeitschrittes (Z1, Z2, Z3) zuordnet, die in dem Zeitschritt (Z1, Z2, Z3) maximal ausgeführt werden können, wobei der Codeumsetzer die Ausführung des Computerprogramms (C1, C2) anhält, wenn die zugeordnete Maximalanzahl der Maschinenbefehle im jeweiligen Zeitschritt (Z1, Z2, Z3) ausgeführt wurde, bevor der Zeitschritt (Z1, Z2, Z3) endet.

6. Verfahren nach Anspruch 5, **dadurch gekennzeichnet, dass** der Interferenzwert in Abhängigkeit von einer Anzahl von Maschinenbefehlen, die am Ende des Zeitschrittes (Z1, Z2, Z3) für das jeweilige Computerprogramm (C1, C2) nicht ausgeführt wurden, oder in Abhängigkeit von einer Anzahl von Maschinenbefehlen, die am Anfang des Zeitschrittes (Z1, Z2, Z3) für das jeweilige Computerprogramm (C1, C2) aufgefüllt werden, um die Maximalanzahl zu erreichen, ermittelt wird.

7. Verfahren nach Anspruch 5 oder 6, **dadurch gekennzeichnet, dass** die Maximalanzahl von Maschinenbefehlen für jedes Computerprogramm (C1, C2) in Abhängigkeit von wenigstens einem ermittelten Interferenzwert festgelegt wird.

8. Verfahren nach einem der vorhergehenden Ansprüche, **dadurch gekennzeichnet, dass** die Datenverarbeitungsanlage (10) ein Avionikcomputer für den on-board Flugbetrieb in einem Flugobjekt ist, wobei die Computerprogramme (C1, C2) jeweils zur Durchführung eines flugrelevanten Betriebsverfahrens eingerichtet sind.

9. Computerprogramm (C1, C2) mit Programmcodemitteln, eingerichtet zur Durchführung des Verfahrens nach einem der vorhergehenden Ansprüche, wenn das Computerprogramm (C1, C2) auf einer Datenverarbeitungsanlage (10) ausgeführt wird.

10. Datenverarbeitungsanlage (10), die wenigstens zwei separate Recheneinheiten (13, 14) hat, die sich eine gemeinsame Ressource (12) der Datenverarbeitungsanlage (10) teilen, **dadurch gekennzeichnet, dass** die Datenverarbeitungsanlage (10) einen Codeumsetzer hat und zur Durchführung des Verfahrens nach einem der Ansprüche 1 bis 8 eingerichtet ist.
